# EUROPEAN PATENT SPECIFICATION

(11) **EP 2 017 242 B1**
(45) Date of publication and mention of the grant of the patent: **26.12.2012**
(21) Application number: 06743493.6
(22) Date of filing: 11.05.2006
(51) Int. Cl.: C05D 11/00, C05G 5/00, C05D 9/02

(54) **METHODS FOR OBTAINING NITROGENATED FERTILIZERS AND COMPLEXES AND FERTILIZERS THUS OBTAINED**
VERFAHREN ZUR ERZEUGUNG VON STICKSTOFFDÜNGERN UND SO ERHALTENE KOMPLEXE UND DÜNGER
PROCÉDÉS PERMETTANT D'OBTENIR DES ENGRAIS AZOTÉS ET COMPLEXES ET ENGRAIS AINSI OBTENUS

(43) Date of publication of application: 21.01.2009
(73) Proprietor: Fertinagro Nutrientes, S.L., 44195 Teruel (ES)
(72) Inventor: ATARES REAL, Sergio, E-44195 Teruel (ES)
(74) Representative: Mato Adrover, Ángel Luis
(86) International application number: PCT/ES2006/070055
(87) International publication number: WO 2007/132032

(56) References cited:
- EP-A- 1 595 860
- WO-A-96/27571
- GB-A- 1 060 182
- GB-A- 1 134 465
- GB-A- 1 259 778
- US-A1- 4 058 389
- US-A1- 5 514 201

## Description

### OBJECT OF THE INVENTION

The present invention relates to a process for producing nitrogenous and complex fertilisers, the composition of which includes a nitrification inhibitor, this inhibitor having as active principle the presence of a reducer cation, specifically iron (ii) obtained from by-products of the titanium industry. The invention also relates to the fertilisers thereby produced.

### BACKGROUND OF THE INVENTION

The most needed and used nutrient in crops is nitrogen, with an annual consumption of 90,000,000 tons of N applied (Data from IFA (International Fertilizer Industry Association), 2005), with continued growth foreseen until 2010 at an annual rate of 1.7%.

The N applied to soil in fertilisers has various forms, mainly nitric, ammoniacal, ureic and organic. When applied to the soil the N undergoes transformation processes that convert one forms into others, producing its absorption by crops or the loss of the nutrient in various ways:

Losses due to emissions to the atmosphere of nitrogen oxides and ammonium oxides (by the processes known as volatilisation and denitrification);
Losses due to lixiviation processes;
Losses due to soil erosion.

In general, it is estimated that 50% of fertilisers added reach the crops during the growth season; the remaining amount increases the reactive nitrogen present in the environment, with a harmful impact on ecosystems and human health.

The use of N as a source of nutrients is unavoidable, so that it is necessary to find the best form of application and reduce nitrogen losses through the various processes that take place in the soil.

Thus, the central issue is to increase the efficiency of the use of nitrogen, thereby reducing the amount of nitrogen applied per food unit produced.

An increased efficiency in the use of nitrogen is therefore an awaited need. In fact, policies are being set in place to favour such an improved use, and certain areas of Europe have been established in which nitrogen cannot be supplied in certain forms and for certain crops, due to the presence in aquifers of high concentrations of nitrate and other reactive nitrogen forms.

The manners in which the efficiency of nitrogen use can be increased can be divided into:
- Selecting and modifying crops to increase the effective use (genetics);
- High-efficiency fertilisers;
- Developing new application methods;
- More efficient nitrogen application management.

The fertiliser of the present invention is encompassed within high-efficiency fertilisers, defined as products with characteristics that minimise potential nutrient losses to the environment.

This type of fertilisers include several types:
- Controlled-release fertilisers;
- Gradual-release fertilisers;
- Stabilised fertilisers (with urease or nitrification inhibitors).

Currently, the use of these high-efficiency fertilisers worldwide amounts to 0.25% of the total nitrogen applied to the soil.

The reason for this low use are mainly economic factors.

Therefore, to increase their application it is necessary to reduce their cost, favouring their use by large numbers of farmers. For this reason, it is necessary to develop new products that provide the benefits expected from these fertilisers at a lower cost.

The fertilisers already used in conventional agriculture are stabilised fertilisers, mainly because their price is much lower than that of controlled or gradual release fertilisers.

Stabilised fertilisers can have two types of inhibitors:
- Urease inhibitors
- Nitrification inhibitors.

The applicant of this invention also holds patent with publication number ES2204307, which describes fertilisers with an agent that reduces the volatilisation of nitrogen in compounds made of mixes of MCDS (monocarbamide dihydrogen sulphate) and DCDS (dicarbamide dihydrogen sulphate). Therefore, it is a stabilised fertiliser with urease inhibitors.

Stabilised fertilisers, such as that described in patent ES2204307, are currently the most widely used type and have been developed mainly to control the nitrification process.

Nitrification is a process involving aerobic oxidation of reduced forms of nitrogen (ammoniacal) to nitrites and nitrates by autotrophic or heterotrophic paths. The most common path is autotrophic, which is performed by nitrosome and nitrobacter bacteria.

Inhibitors currently available interact with nitrosomes and prevent the transformation of ammoniacal to nitrite, thereby stabilising the ammoniacal form which is more stable to lixiviation and denitrification.

Several nitrification inhibitors have been developed, but to this date only three have been applied successfully and have been recognised as nitrification inhibiting agents by European regulatory organisms: nitrapyrin, dicyandiamide, and BASF has recently developed DMPP (3,4, dimethyl pirazol phosphate).

These three inhibitors have a direct effect on nitrosomes, this is, they either destroy the bacteria present in the soil or inhibit or slow down their activity. Some of these inhibitors have been used in herbicidal and fungicidal formulations, which leads to the question of their effect on the soil when applied massively for a long period.

The object of the present patent is to provide formulations of nitrogenous fertilisers with an improved efficiency and their production method for obtaining fertilisers that maintain the more stable and efficient fertilisation forms in the soil, namely ammoniacal and ureic nitrogen, using substances that are typically present in soil in nature.

### DESCRIPTION OF THE INVENTION

The nitrogenous fertiliser object of the invention has compounds of reduced nitrogen as its basic raw materials.

When reference is made to compounds of reduced nitrogen in this memory, we are referring to ammonia and the reaction products of this substance in ammoniacal and ureic forms, not including the presence of nitrogen oxides. They are mainly urea, ammonium sulphate and ammonia, although no other source of these forms is ruled out.

A second basic material of this fertiliser is a stable iron (ii) compound.

Fe (ii) is a known reducing agent.

This cation can capture oxygen from the soil to change from Fe<2+> to Fe<3+>, thereby making this oxygen unavailable for the activity of nitrification bacteria. As the oxidation activity is reduced the more stable ammoniacal form remains for a longer time.

The process starts with an iron (ii) salt, mainly from by-products of the production of TiO₂ from titanium slag. These by-products are mainly iron sulphates, with high amounts of free sulphuric acid (to prevent oxidation to Fe³⁺), such as iron sulphate heptahydrate, also known as copperas, and a by-product with iron (ii) sulphate monohydrate base, the free acid content ranging from 2% to 40%.

These iron salts must remain as long as possible in their active form as iron (ii). However, it is not possible to handle a fertiliser product with free acid as this would lead to clumping phenomena and reactions with other substances, leading to harmful effects for the quality of the final product.

Therefore, a manner of stabilisation must be sought at high pH values, around 5 and 6. To achieve this, the iron (ii) sulphate is transformed into ferrous ammonium sulphate hexahydrate (FASH), which is much more stable to oxidation at the typical pH values of the final fertiliser product.

Thus, the fertiliser of the invention comprises ferrous ammonium sulphate hexahydrate, which sequesters the oxygen present in the soil, reducing the oxidative activity of the bacteria responsible for nitrification.

A complex fertiliser can be obtained by adding other raw materials in the granulation stage to provide the nutrients characteristic of this type of formulations, such as monoammonium phosphate, diammonoium phosphate, TSP (triple super phosphate), SSP (simple super phosphate, phosphate rock, potassium chloride or potassium sulphate.

It is known from the state of the art to provide a medium for growing plants as the one disclosed in GB 1134465 which consists of a felt mat, of predetermined shape and size of natural cellulose fibres and a polymer which has been polymerised in situ.

A process of preparation of granulated ammonium nitrate-sulphate fertilizer is disclosed in EP 1595860 A2.

A blended fertilizer is known from GB 1060182 which comprises two or more species of discrete fertilizer particles.

The process has a first mixing stage in a pug-mill or similar type mixer of a reduced nitrogen compound such as urea with a stable Fe (ii) compound such as ferrous sulphate monohydrate; as there is free acidity, the urea will be fused by the formation of MCDS (monocarbamide dihydrogen sulphate) and DCDS (dicarbamide dihydrogen sulphate).

After it is fused a second granulation stage begins in a granulator in which the remaining solid materials are introduced, ammonium sulphate, anhydrous ammonia and the granulation water; when the liquid phase is created the reaction between the ammonia and the free sulphuric acid takes place, and then with the ferrous sulphate, thereby forming ferrous ammonium sulphate hexahydrate (FASH), which provides the stable phase and is responsible for inhibiting nitrification.

The final ingredient added to the granulator is magnesium, either as calcined dolomite, magnesium hydroxide or magnesium oxide, thereby obtaining magnesium sulphate which can capture hydration water and therefore stabilises the fertiliser in case of any hygroscopic phenomena.

To obtain a complex fertiliser, in addition to the aforementioned materials also added to the granulator are ammonium phosphate, TSP, SSP, phosphate rock, potassium chloride and potassium phosphate.

Finally, there are stages for drying, cooling, sieving and conditioning with oils.

The final fertilised obtained has the following composition:

| Parameters | % by weight |
|---|---|
| Total nitrogen (N) | 20-30 |
| Ammoniacal nitrogen (N) | 9-12 |
| Ureic nitrogen (N) | 10-16 |
| Magnesium oxide (MgO) | 0.1-0.7 |
| Sulphur trioxide (SO₃) | 28-36 |
| Iron | 1.3-2 |
| Manganese (Mn) | 0-0.20 |
| Zinc (Zn) | 0-0.10 |

In the case of complex fertilisers:

| Parameters | % by weight |
|---|---|
| Total nitrogen (N) | 15-25 |
| Ammoniacal nitrogen (N) | 5-15 |
| Ureic nitrogen (N) | 5-15 |
| Total P₂O₅ | 5-15 |
| Water-soluble P₂O₅ | 5-15 |
| K₂O | 3-6 |
| Magnesium oxide (MgO) | 0.5-5 |
| Sulphur trioxide (SO₃) | 28-36 |
| Iron | 1.3-2 |
| Manganese (Mn) | 0-0.20 |
| Zinc (Zn) | 0-0.10 |
| Calcium oxide (CaO) | 1-2 |

The nitrification process is inhibited by the presence of FASH, which competes for the oxygen present in the soil, so that said compound captures the oxygen and thereby prevents the massive presence of nitrates and nitrites, ensuring the presence of the ammoniacal form in the soil for a longer time.

The fertiliser formed must have certain acidic nature for a gradual oxidation of the iron and to favour the presence of MCDS and DCDS, thereby ensuring a double effect on the action of the enzyme urease and on the bacteria that participate in nitrification.

### DESCRIPTION OF THE DRAWINGS

The present description is completed by a set of drawings which illustrate the preferred example and in no way limit the invention.

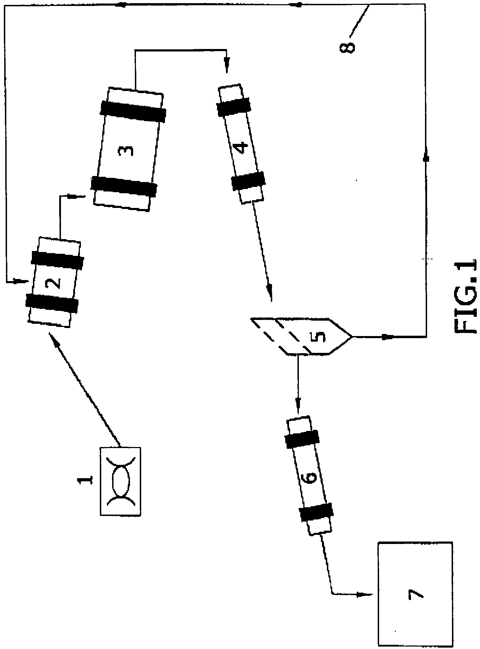

Figure 1 shows a scheme of the fertiliser manufacturing process.

### PREFERRED EMBODIMENT OF THE INVENTION

In a first example of the invention, a test was performed at a granulation plan comprising the equipment shown in the diagram of figure 1:
Pug-mill mixer (1)
Rotatory granulator (2)
Rotatory drier (3)
Rotatory primary cooler (4)
Sieves (5)
Conditioner (6)
Final store (7).

The manufacture lasted 15 hours of uninterrupted operation at an approximate flow rate of final product of 20 ton/hr, with a recycle/final product ratio of 2 to 1. 300 tons of final product were obtained.

The doses of raw materials used were as follows:

| **Raw Material** | **Percentage by weight** |
|---|---|
| Urea | 33 |
| Ammonium sulphate | 42 |
| Dolomite | 5 |
| Ammonia | 3 |
| Iron (ii) sulphate monohydrate | 9 |
| Sulphuric acid | 8 |

The pug-mill (1) was fed urea at a rate of 6.5 ton/hr, together with a flow of 1.8 ton/hr of the by-product of TiO₂ production, iron sulphate monohydrate, with the following composition:

| Material | Composition percentage by weight |
|---|---|
| Iron (ii) sulphate monohydrate | 57.5% |
| Sulphuric acid | 18% |
| Manganese sulphate | 2.5% |
| Titanium sulphate | 4.5% |
| Silica | 5% |
| Free water | 9.25% |
| Other oxides | 3% |

In addition, to this mixture is added a part of sulphuric acid, 1 ton/hr, so that the mixture fuses and the temperature increases to about 50°C.

The outlet of the pug-mill mixer (1) reaches the granulator (2), where the rest of the solid supply products are added as well as the remaining sulphuric acid and the ammonia. Also introduced in the granulator (2) is the recycle obtained from the granulation loop, not shown in figure 1.

The mixture leaves the granulator (2) at an approximate temperature of 65 °C with a large amount of granulated material, which is fed to the drier (3) where drying takes place at drier head temperatures from 200 to 300 °C and tail temperatures of from approximately 60 to 70°C. The final product exits towards the primary cooler (4), where its temperature is cooled from 50°C to 40°C, hardening the product by crystallisation of the salts and then leading the product to the final product sieves (5), where the commercial product is physically separated from the recycle, which is fed again to the granulator via the recirculation line (8).

The final product is again cooled and conditioned in the conditioner (6) with paraffin oils to prevent clumping, and is left ready to be dispatched in the end store (2) .

The final product has the following composition:

| Parameters | Result (% by weight) |
|---|---|
| Total nitrogen (N) | 26 |
| Ammoniacal nitrogen (N) | 11.3 |
| Ureic nitrogen (N) | 14.6 |
| Magnesium oxide | 0.5 |
| Sulphur trioxide (SO₃) | 32.3 |
| Iron (Fe) | 1.7 |
| Manganese (Mn) | 0.14 |
| Zinc (Zn) | 0.032 |
| Calcium oxide (CaO) | 1.26 |

In a second example of realisation, the iron (ii) sulphate is supplied in the form of copperas.

9% of the TiO₂ manufacture by-product is replaced with a similar amount of copperas, with 99% iron (ii) sulphate heptahydrate and 1% water.

| **Raw Material** | **Percentage by weight** |
|---|---|
| Urea | 33 |
| Ammonium sulphate | 42 |
| Dolomite | 5 |
| Ammonia | 3 |
| Iron (II) sulphate heptahydrate | 9 |
| Sulphuric acid | 8 |

The behaviour is the same, except that a greater fused phase is obtained at the granulator inlet as copperas is entirely soluble and contains 7 molecules of hydration water, so that the need for granulation water is considerably lower.

Another issue to consider is temperature control at the drier, as in this case the maximum temperature should not exceed 65°C, since a transition would take place from iron (ii) sulphate heptahydrate and monohydrate, producing free water that would need to be eliminated.

The appearance of the final product is similar and the resulting composition is as follows:

| Parameters | Result (%) |
|---|---|
| Total nitrogen | 26 |
| Ammoniacal nitrogen (N) | 11.3 |
| Ureic nitrogen (N) | 14.6 |
| Magnesium oxide (MgO) | 0.5 |
| Sulphur trioxide (SO₃) | 32.3 |
| Iron (Fe) | 1.7 |

In a third example of realisation a complex fertiliser is obtained.

The manufacturing installation is the same as in the previous example, changing the process conditions. In this case other raw materials in addition to nitrogenous materials are introduced; as potassium is included in the formulation the recycle increases in the manufacturing process, so that the production rate is lower.

The manufacture took place during 20 hours of uninterrupted operation at an approximate final product rate of 15 ton/hr, with a recycle / final product ratio of 3 to 1. Approximately 300 tons of final product were obtained.

The raw material doses used were as follows:

| Raw Material | Percentage by weight |
|---|---|
| Urea | 24 |
| Ammonium sulphate | 26 |
| Magnesium Hydroxide | 3 |
| Ammonia | 3 |
| Iron (II) sulphate monohydrate | 8 |
| Sulphuric acid | 8 |
| Monoammonium phosphate | 20 |
| Potassium chloride | 8 |

The pug-mill (1) was fed urea at a rate similar to that of the previous example, 6.5 ton/hr, together with a flow of 1.8 ton/hr of the TiO₂ iron sulphate monohydrate and 1 ton/hr, so that the mixture will fuse.

After the pug-mill (1) the granulator (2) is reached, where the remaining solid supply is introduced, as well as the remaining sulphuric acid, the ammonia and the recycle.

The remaining process is the same as in the previous example, obtaining a final product with the following composition:

| Parameters | Result (% by weight) |
|---|---|
| Total nitrogen (N) | 20 |
| Ammoniacal nitrogen (N) | 10 |
| Ureic nitrogen (N) | 10 |
| Total P₂O₅ | 10 |
| Water-soluble P₂O₅ | 10 |
| K₂O | 5.38 |
| Magnesium oxide(MgO) | 2.25 |
| Iron (Fe) | 1.7 |
| SO₃ | 33.5 |
| Manganese (Mn) | 0.14 |
| Zinc (Zn) | 0.032 |
| Calcium oxide (CaO) | 1.26 |

The essence of this invention is not affected by variations in the materials, shape, size and arrangement of its component elements, which are described in a nonlimiting manner that should allow its reproduction by an expert.

## Claims

1. Process for producing a fertiliser comprising the following stages:
- mixing a reduced nitrogen compound comprising urea, ammonium sulphate and ammonia with a stable iron (ii) from a by-product of the production of Titanium oxide compound and sulphuric acid
- granulating the mixture to which is added ammonium sulphate, ammonia, a magnesium compound, sulphuric acid and water; producing a reaction between the ammonia and the free sulphuric acid and later with the ferrous sulphate - drying;
- cooling where the temperature is cooled from 50°C. to 40°C;
- sieving;
- conditioning with paraffin oils.

2. Process according to claim 1 for producing a complex fertiliser **characterised in that** in the granulation stage are added ammonium phosphate, diammonium phosphate, TSP, SSP, phosphate rock, potassium chloride and potassium sulphate.

3. Process according to claim 1 wherein the by-product of the production of titanium oxide is iron (ii) sulphate monohydrate or iron (ii) sulphate heptahydrate.

4. Process according to claim 1 **characterized in that** when the iron compound by-product of the production of titanium oxide is iron (ii) sulphate monohydrate, the drying stage is performed in a drier with head temperatures of 200-300°C and tail temperatures of 60-70°C.

5. Process according to claim 1 **characterized in that** when the iron compound by-product of the production of titanium oxide is iron (ii) sulphate heptahydrate , the drying stage takes place at temperatures under 65°C.

6. Fertilizer obtained by the process previously claimed **characterized in that** it comprises in its composition ferrous ammonium sulphate hex hydrate And nitrogen, ammonical nitrogen, ureic nitrogen, Magnesium oxide, Sulphur trioxide, Iron, Manganese and Zinc.

7. Fertiliser according to claim 6 **characterized in that** the composition % by weight of the elements previously claimed is :
| Parameters | % by weight |
|---|---|
| Total nitrogen (N) | 20-30 |
| Ammoniacal nitrogen (N) | 9-12 |
| Ureic nitrogen (N) | 10-16 |
| Magnesium oxide (MgO) | 0.1-0.7 |
| Sulphur trioxide (SO3) | 28-36 |
| Iron | 1.3-2 |
| Manganese (Mn) | 0-0.20 |
| Zinc (Zn) | 0-0.10 |

8. fertiliser according to claim 6 **characterized in that** in case of being a complex fertiliser it will comprise additionally the following components P₂O₅, Water-soluble P₂O₅, K₂O and the composition % by weight would be:
| Parameters | % by weight |
|---|---|
| Total nitrogen (N) | 15-25 |
| Ammoniacal nitrogen (N) | 5-15 |
| Ureic nitrogen (N) | 5-15 |
| Total P₂O₅ | 5-15 |
| Water-soluble P₂O₅ | 5-15 |
| K₂O | 3-6 |
| Magnesium oxide (MgO) | 0.5-5 |
| Sulphur trioxide (SO3) | 28-36 |
| Iron | 1.3-2 |
| Manganese (Mn) | 0-0.20 |
| Zinc (Zn) | 0-0.10 |
| Calcium oxide (CaO) | 1-2 |

## Patentansprüche

1. Verfahren zur Herstellung eines Düngemittels, umfassend die folgenden Schritte:
- Mischen einer stickstoffreduzierten Verbindung umfassend Harnstoff, Ammoniumsulfat und Ammoniak mit einem stabilen Eisen (II) aus einem Nebenprodukt der Herstellung einer Titanoxidverbindung und Schwefelsäure
- Granulieren des Gemisches, zu welchem Ammoniumsulfat, Ammoniak, eine Magnesiumverbindung, Schwefelsäure und Wasser hinzugefügt wird; Hervorrufen einer Reaktion zwischen dem Ammoniak und der freien Schwefelsäure und danach mit dem Eisen(II)-sulfat
- Trocknen;
- Abkühlen, wobei die Temperatur von 50°C auf 40°C abgekühlt wird;
- Absieben;
- Aufbereitung mit Parrafinölen.

2. Verfahren nach Anspruch 1 zur Herstellung eines komplexen Düngemittels, **dadurch gekennzeichnet, dass** bei der Granulationsphase Ammoniumphosphat, Diammoniumphosphat, TSP, SSP, Phosphatgestein, Kaliumchlorid und Kaliumsulfat hinzugefügt werden.

3. Verfahren nach Anspruch 1, wobei das Nebenprodukt der Herstellung von Titanoxid Eisen(II)-sulfat-Monohydrat oder Eisen(II)-sulfat-Heptahydrat ist.

4. Verfahren nach Anspruch 1, **dadurch gekennzeichnet, dass** wenn das Eisenverbindungsnebenprodukt der Herstellung von Titanoxid Eisen(II)-sulfat-Monohydrat ist, die Trocknungsphase in einem Trockner mit Anfangstemperaturen von 200-300°C und Endtemperaturen von 60-70°C durchgeführt wird.

5. Verfahren nach Anspruch 1, **dadurch gekennzeichnet, dass** wenn das Eisenverbindungsnebenprodukt der Herstellung von Titanoxid Eisen(II)-sulfat-Heptahydrat ist, die Trocknungsphase bei einer Temperatur unter 65°C stattfindet.

6. Düngemittel, welches durch das zuvor beanspruchte Verfahren erhalten wird, **dadurch gekennzeichnet, dass** es in seiner Zusammensetzung Ferroammoniumsulfat-Hexahydrat und Stickstoff, Ammoniakstickstoff, Carbamidstickstoff, Magnesiumoxid, Schwefeltrioxid, Eisen, Mangan und Zink umfasst.

7. Düngemittel nach Anspruch 6, **dadurch gekennzeichnet, dass** die Zusammensetzung nach Gewichtsprozent der zuvor beanspruchten Elemente wie folgt ist:
| Parameter | Gewichtsprozent |
|---|---|
| Gesamtstickstoff (N) | 20-30 |
| Ammoniakstickstoff (N) | 9-12 |
| Carbamidstickstoff (N) | 10-16 |
| Magnesiumoxid (MgO) | 0,1-0,7 |
| Schwefeltrioxid (SO3) | 28-36 |
| Eisen | 1,3-2 |
| Mangan (Mn) | 0-0,20 |
| Zink (Zn) | 0-0,10 |

8. Düngemittel nach Anspruch 6, **dadurch gekennzeichnet, dass** es, wenn es ein komplexes Düngemittel ist, zusätzlich folgende Bestandteile umfasst: P₂O₅, wasserlösliches P₂O₅, K₂O, und die Zusammensetzung nach Gewichtsprozent wie folgt ist:
| Parameter | Gewichtsprozent |
|---|---|
| Gesamtstickstoff (N) | 15-25 |
| Ammoniakstickstoff (N) | 5-15 |
| Carbamidstickstoff (N) | 5-15 |
| Gesamt-P₂O₅ | 5-15 |
| Wasserlösliches P₂O₅ | 5-15 |
| K₂O | 3-6 |
| Magnesiumoxid (MgO) | 0,5-5 |
| Schwefeltrioxid (SO3) | 28-36 |
| Eisen | 1,3-2 |
| Mangan (Mn) | 0-0,20 |
| Zink (Zn) | 0-0,10 |
| Calciumoxid (CaO) | 1-2 |

## Revendications

1. Procédé de production d'un fertilisant comprenant les étapes suivantes :
- mélanger un composé de nitrogène réduit comprenant de l'urée, du sulfate d'ammonium et de l'ammoniaque avec un fer stable (ii) à partir d'un sous-produit de la production d'un composé d'oxyde de titane et d'acide sulfurique :
- granuler le mélange auquel est ajouté du sulfate d'ammonium, de l'ammoniaque, un composé de magnésium, de l'acide sulfurique et de l'eau ; produire une réaction entre l'ammoniaque et l'acide sulfurique libre et plus tard avec le sulfate ferreux ; sécher ;
- refroidir où la température est refroidie de 50 °C à 40 °C ;
- tamiser ;
- conditionner avec des huiles de paraffines.

2. Procédé selon la revendication 1 pour produire un fertilisant complexe, **caractérisé en ce que** lors de l'étape de granulation sont ajoutés du phosphate d'ammonium, du phosphate de diammonium, TSP, SSP, phosphorite, chlorure de potassium et sulfate de potassium.

3. Procédé selon la revendication 1, dans lequel le sous-produit de la production d'oxyde de titane est du monohydrate de sulfate de fer (ii) ou de l'heptahydrate de sulfate de fer (ii).

4. Procédé selon la revendication 1, **caractérisé en ce que** lorsque le sous-produit de composé de fer de la production d'oxyde de titane est du monohydrate de sulfate de fer (ii), l'étape de séchage est réalisée dans un séchoir avec des températures de tête de 200-300 °C et des températures de queue de 60-70 °C.

5. Procédé selon la revendication 1, **caractérisé en ce que** lorsque le sous-produit de composé de fer de la production d'oxyde de titane est de l'heptahydrate de sulfate de fer (ii), l'étape de séchage est réalisée à des températures inférieures à 65 °C.

6. Fertilisant obtenu par le procédé revendiqué ci-dessus, **caractérisé en ce qu'**il comprend dans sa composition du sulfate d'ammonium ferreux hexahydraté et du nitrogène, du nitrogène ammoniacal, du nitrogène uréique, de l'oxyde de magnésium, du trioxyde de soufre, du fer, du manganèse et du zinc.

7. Fertilisant selon la revendication 6, **caractérisé en ce que** le pourcentage en poids de la composition des éléments revendiqués ci-dessus est :
| Paramètres | % en poids |
|---|---|
| Nitrogène (N) total | 20 - 30 |
| Nitrogène (N) ammoniacal | 9 - 12 |
| Nitrogène (N) uréique | 10 - 16 |
| Oxyde de magnésium (MgO) | 0,1 - 0,7 |
| Trioxyde de soufre (SO3) | 28 - 36 |
| Fer | 1,3 - 2 |
| Manganèse (Mn) | 0 - 0,20 |
| Zinc (Zn) | 0 - 0,10 |

8. Fertilisant selon la revendication 6, **caractérisé en ce que** dans le cas d'être un fertilisant complexe, il comprendra en outre les composants suivants P₂O₅, P₂O₅ soluble dans l'eau, K₂O et le pourcentage de la composition en poids serait :
| Paramètres | % en poids |
|---|---|
| Nitrogène (N) total | 15 - 25 |
| Nitrogène (N) ammoniacal | 5 - 15 |
| Nitrogène (N) uréique | 5 - 15 |
| P₂O₅ total | 5 - 15 |
| P₂O₅ soluble dans l'eau | 5 - 15 |
| K₂O | 3 - 6 |
| Oxyde de magnésium (MgO) | 0,5 - 5 |
| Trioxyde de soufre (SO3) | 28 - 36 |
| Fer | 1,3 - 2 |
| Manganèse (Mn) | 0 - 0,20 |
| Zinc (Zn) | 0 - 0,10 |
| Oxyde de calcium (CaO) | 1 - 2 |
